# DEMANDE DE BREVET EUROPEEN

(11) **EP 2 400 187 A1**
(43) Date de publication de la demande: **28.12.2011**
(21) Numéro de dépôt: 11171028.1
(22) Date de dépôt: 22.06.2011
(51) Int. Cl.: F16H 59/70, F16H 63/20

(54) **Dispositif de détection de l'état d'une boîte de vitesses**

(30) Priorité: 23.06.2010 FR 1054993
(71) Demandeur: Peugeot Citroën Automobiles SA, 78140 Vélizy-Villacoublay (FR)
(72) Inventeur: Lefort, Vincent, 91100 CORBEIL ESSONNES (FR); Lamoureux, Louis, 75014 PARIS (FR)

(57) **Abrégé**

L'invention concerne un dispositif de détection de l'état d'une boîte de vitesses, comprenant un capteur (3) fixé au carter de la boîte de vitesse et associé à un levier de commande (2) de la boîte de vitesses pouvant coulisser longitudinalement par rapport au carter de la boîte de vitesses entre plusieurs positions de sélection et pouvant pivoter autour de son axe longitudinal à partir de chacune de ces positions de sélection pour l'engagement d'un rapport de vitesse, le capteur (3) fournissant une information représentative d'au moins la position angulaire du levier (2) par rapport au carter.

## Description

La présente invention concerne un dispositif de détection de l'état, ou position, d'une boîte de vitesses, notamment pour un véhicule automobile.

Il est utile, dans un véhicule, de connaître l'état de la boîte de vitesses, afin de savoir si elle est au point mort ou si une vitesse est engagée, et éventuellement si la boîte de vitesses est en position de synchronisation ou de crabotage, et quel est le rapport de vitesse engagée.

Ces informations peuvent être, par exemple, envoyées à l'ordinateur de bord afin d'adapter le régime moteur, le couple moteur, de modifier en conséquence les informations apparaissant sur le tableau de bord, etc. Il peut être important, notamment, de détecter l'engagement du rapport de marche arrière afin de provoquer l'allumage des feux de recul du véhicule.

Pour détecter ces informations, il est généralement mis en oeuvre des capteurs internes à la boîte de vitesses qui peuvent, par exemple, être des capteurs utilisant l'effet Hall ou des contacteurs. Placés dans le carter de la boîte de vitesses, ces capteurs sont susceptibles d'être salis par l'huile et par de la limaille présentes dans la boîte de vitesses, ce qui peut altérer leurs performances.

Par ailleurs, ces capteurs, s'ils peuvent détecter le point mort et la position dans laquelle une vitesse est engagée, ne permettent pas une détection précise de la position de la boîte de vitesses pendant l'engagement d'une vitesse. Ils ne permettent notamment pas de détecter les positions de synchronisation et de crabotage.

Par ailleurs, les capteurs généralement utilisés ne permettent de détecter le point mort de la boîte de vitesses que lorsque le levier de vitesse est au repos, et pas sur l'ensemble des positions de point mort, appelé « couloir point mort ». Ainsi, quand le conducteur agit sur son levier de vitesse dans le couloir point mort, sans engager de rapport de vitesses, le point mort n'est plus détecté par les capteurs existants.

Par ailleurs les capteurs existant nécessitent la mise en action de deux composants (cible et capteur). Il est alors difficile de garantir le positionnement précis de la cible par rapport à son capteur.

Enfin, la nécessité de détecter d'une part le point mort et d'autre part l'engagement de la marche arrière rend nécessaire l'installation dans la boîte de vitesses d'au moins deux capteurs distincts l'un de l'autre.

La présente invention a pour objectif de pallier ces inconvénients de l'art antérieur.

En particulier, la présente invention a pour objectif de permettre une détection précise et fiable de l'état d'une boîte de vitesses.

L'invention a également pour objectif de permettre une telle détection en utilisant des moyens simples et peu onéreux.

Ces objectifs, ainsi que d'autres qui apparaîtront plus clairement par la suite, sont atteints par un dispositif de détection de l'état d'une boîte de vitesses, comprenant selon l'invention un capteur fixé au carter de la boîte de vitesse et associé à un levier de commande de la boîte de vitesses pouvant coulisser longitudinalement par rapport au carter de la boîte de vitesses entre plusieurs positions de sélection et pouvant pivoter autour de son axe longitudinal à partir de chacune de ces positions de sélection pour l'engagement d'un rapport de vitesse, le capteur fournissant une information représentative d'au moins la position angulaire du levier par rapport au carter.

Avantageusement, le capteur comprend au moins une première bague pivotante dans un boitier du capteur, par rapport à laquelle le levier peut coulisser, et liée en rotation avec ce levier, le capteur fournissant une information représentative de la position angulaire de cette bague.

Avantageusement, la première bague est liée en rotation avec le levier par un ergot solidaire de la bague et engagé dans une rainure du levier.

Selon un mode de réalisation avantageux de l'invention, le capteur est apte à fournir également une information représentative de la position longitudinale du levier par rapport au carter, entre ses positions de sélection.

Avantageusement, le capteur comprend une seconde bague pivotante par rapport au boitier du capteur, associée au levier par une liaison hélicoïdale, le coulissement du levier entre ses positions de sélection entraînant une rotation de ladite seconde bague, permettant au capteur de fournir des informations relatives au décalage angulaire entre la première et la seconde bague, représentatif de la position longitudinale du levier par rapport au carter, entre ses positions de sélection.

Avantageusement, la rainure présente un premier bord s'étendant parallèlement à l'axe longitudinal du levier et un second bord s'étendant hélicoïdalement, et l'ergot solidaire de ladite première bague est maintenu en appui contre ledit premier bord et ladite second bague est en liaison hélicoïdale avec le levier par un ergot solidaire de ladite seconde bague et maintenu en appui contre ledit second bord.

Avantageusement, le capteur est monté à l'extérieur du carter de la boîte de vitesses, et est traversé par une partie d'extrémité du levier dépassant de ce carter.

L'invention concerne également un capteur de détection de l'état d'une boîte de vitesses, destiné à être monté sur le carter de la boîte de vitesses, comprenant au moins une première bague pivotante dans un boitier du capteur, par rapport à laquelle le levier de commande de la boîte de vitesses peut être monté coulissant et liée en rotation, de façon à fournir une information représentative de la position angulaire du levier.

Selon un mode de réalisation avantageux, le capteur comprend également une seconde bague pivotante dans le boitier du capteur, apte à être liée au levier de commande par une liaison hélicoïdale, de façon à fournir des informations relatives au décalage angulaire entre la première et la seconde bague, représentatif de la position longitudinale du levier par rapport au carter.

L'invention concerne également un véhicule automobile équipé d'une boîte de vitesses équipée d'un dispositif de détection tel que décrit ci-dessus.

Avantageusement, ce véhicule comprend des moyens de calcul permettant de calculer des informations relatives à l'état de la boîte de vitesses à partir des informations fournies par ledit capteur.

D'autres buts, avantages et caractéristiques de l'invention apparaîtront plus clairement dans la description qui suit de deux modes de réalisation préférés, non limitatifs de l'objet et de la portée de la présente demande de brevet, accompagnés de dessins dans lesquels :
- la figure 1 est une vue en perspective partielle d'une boîte de vitesses sur laquelle peut être monté un capteur selon un mode de réalisation de l'invention ;
- la figure 2 est une vue en perspective d'un capteur d'état de la boîte de vitesses, selon un premier mode de réalisation de l'invention ;
- les figures 3A, 3B et 3C sont des vues de coupe d'une partie d'extrémité du levier de commande de la boîte de vitesses de la figure 1, équipé du capteur de la figure 2, respectivement dans trois positions de sélection ;
- la figure 4A est une vue en perspective d'une partie d'extrémité du levier de commande d'une boîte de vitesses selon un autre mode de réalisation de l'invention ;
- les figures 4B et 4C représentent la partie d'extrémité du levier de commande de la figure 4A sur lequel sont assemblées, respectivement, des bagues d'un capteur de position, et le capteur de positions complet ;
- la figure 5 est une vue de coupe de la partie d'extrémité du levier des figures 4A à 4C équipée du capteur de position ;
- les figures 6A à 6I sont des vues de dessus de la partie d'extrémité du levier de vitesse des figures 4A à 4C équipé des parties annulaires du capteur de position, respectivement dans neuf positions possibles du levier de commande ;
- la figure 7 est un graphique représentant les valeurs d'angles détectées par le capteur des figures 4 à 6, en fonction des différents états de la boîte de vitesses ; et
- la figure 8 est un autre graphique représentant les valeurs d'angles pouvant être détectées par le capteur 3 à 6 en fonction des positions de sélection du levier de commande.

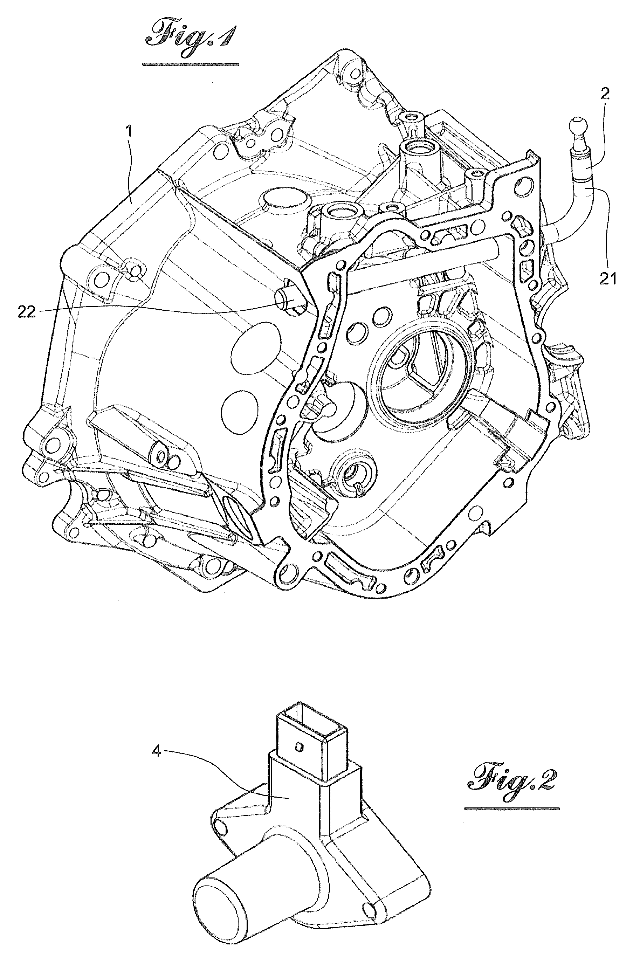

La figure 1 est une représentation partielle d'une boîte de vitesses comprenant un carter 1 et un levier de commande 2 montés coulissant et pivotant par rapport au carter 1.

De façon classique, ce levier de commande 2 est actionné par le levier de passage de vitesse du poste de conduite du véhicule auquel il est relié par un système de tringles ou un système de câbles. Le levier de commande 2 permet ainsi de commander la boîte de vitesses.

Plus précisément, ce levier de commande 2 peut, quand la boîte de vitesses est au point mort, coulisser le long de son axe longitudinal (correspondant à l'axe longitudinal de sa portion traversant la boîte de vitesses) dans la boîte de vitesses afin de prendre dans le couloir de point mort la position de sélection souhaitée.

Quand le levier de commande est dans une position de sélection permettant l'engagement d'une vitesse, il peut pivoter, dans le sens horaire ou anti-horaire, afin de quitter sa position angulaire correspondant au point mort de la boîte de vitesses et d'engager un rapport de vitesse choisi.

Comme le représente la figure 1, seule la partie centrale du levier de commande 2 est à l'intérieur du carter 1 de boîte de vitesses afin de commander la position des éléments mobiles internes (non représentés) de la boîte de vitesses.

Une première partie d'extrémité 21 coudée, dont l'extrémité est destinée à être reliée au levier de passage de vitesse du poste de conduite, est à l'extérieur de ce carter 1. La seconde partie d'extrémité 22, opposée à la partie d'extrémité 21, dépasse également à l'extérieur du carter 1.

La figure 2 représente un capteur 4 destiné à être solidarisé à l'extérieur du carter 1 de la boîte de vitesses en couvrant l'extrémité 22 du levier de commande 2. Ce capteur 4 est un capteur d'angle, destiné à mesurer la position angulaire du levier de commande 2 par rapport au carter 1.

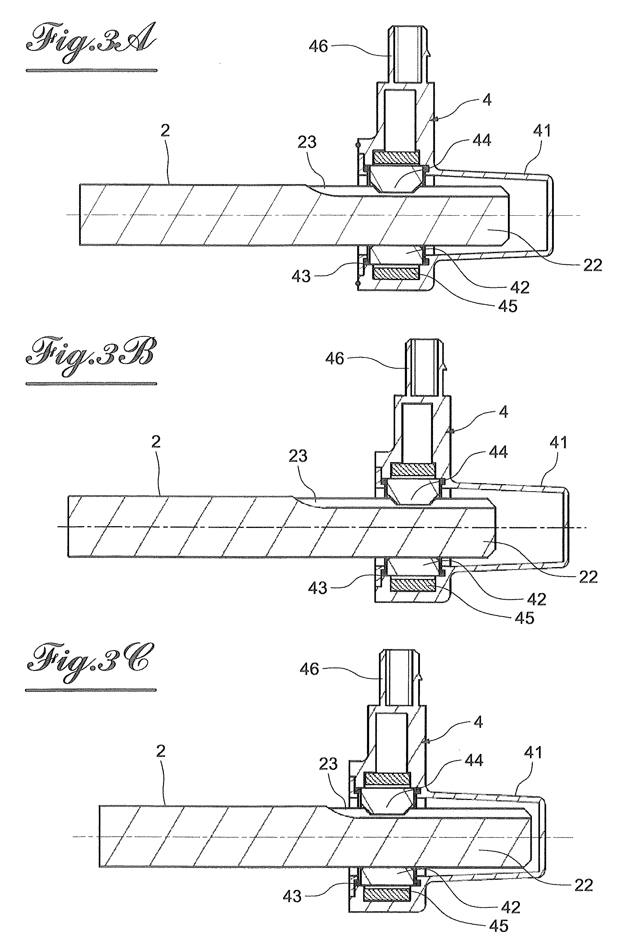

Les figures 3A à 3C sont des vues de coupe de la partie d'extrémité 22 du levier 2 équipé du capteur 4, selon un plan passant par l'axe longitudinal de ce levier. Le capteur 4 comporte un boîtier 41 fixé au carter 1 de la boîte de vitesses et une bague 42 de forme annulaire, montée coulissante sur la partie d'extrémité 22 du levier 2.

Cette bague 42 présente sur sa face interne un ergot 44 qui pénètre dans une rainure longitudinale 23 définie dans la partie d'extrémité 22 du levier 2, afin de bloquer la rotation de la bague 42 par rapport au levier 2. Par ailleurs, le levier 2 peut coulisser longitudinalement par rapport à la bague 42, mais la translation de cette bague 42 par rapport au châssis 1 de la boîte de vitesses est bloquée par le boitier 41 du capteur 4 et par un couvercle 43 fermant ce boitier.

Le capteur 4 comprend également un ou plusieurs systèmes sensitifs 45 placés autour de la périphérie de la bague 42, détectant la rotation de cette bague 42 par rapport au boitier 41. De tels systèmes sensitifs, connus en eux-mêmes par l'homme du métier, peuvent par exemple utiliser l'effet Hall ou la mesure résistive. Ils permettent préférentiellement de mesurer l'angle de façon statique.

Le capteur 4 ainsi conformé permet de mesurer de façon précise la position angulaire du levier 2 par rapport au carter 1 de la boîte de vitesses, autour de son axe longitudinal, quelle que soit la position de la sélection de ce levier. Il peut par exemple mesurer cette position angulaire dans la position de sélection neutre représentée par la figure 3A, dans la position de sélection représentée par la figure 3B dans laquelle l'axe 2 est décalé vers la gauche et dans la position de sélection représentée par la figure 3C dans laquelle le levier 2 est décalé vers la droite.

La mesure de la position angulaire du levier 2 par rapport au carter 1 de la boîte de vitesses permet de savoir si ce levier est dans une position de point mort, indépendamment de sa position de sélection. Pour l'engagement d'une vitesse, le levier de commande 2 pivote par rapport à la position angulaire de point mort, dans un sens pour engager les vitesses paires, et dans l'autre sens pour engager les vitesses impaires. Cette rotation est alors détectée par les systèmes sensitifs 45 du capteur 4 qui envoient à l'ordinateur de bord un signal électrique représentatif de la position angulaire du levier 2, à travers une connectique passant par l'ouverture 46 de l'enveloppe 41.

Selon l'amplitude de l'angle détecté, il est également possible de déduire le niveau de l'engagement d'une vitesse. Il est ainsi possible de savoir si la boîte de vitesses est en position de synchronisation, de crabotage ou si le rapport de vitesse est complètement engagé, en distinguant les vitesses paires des vitesses impaires.

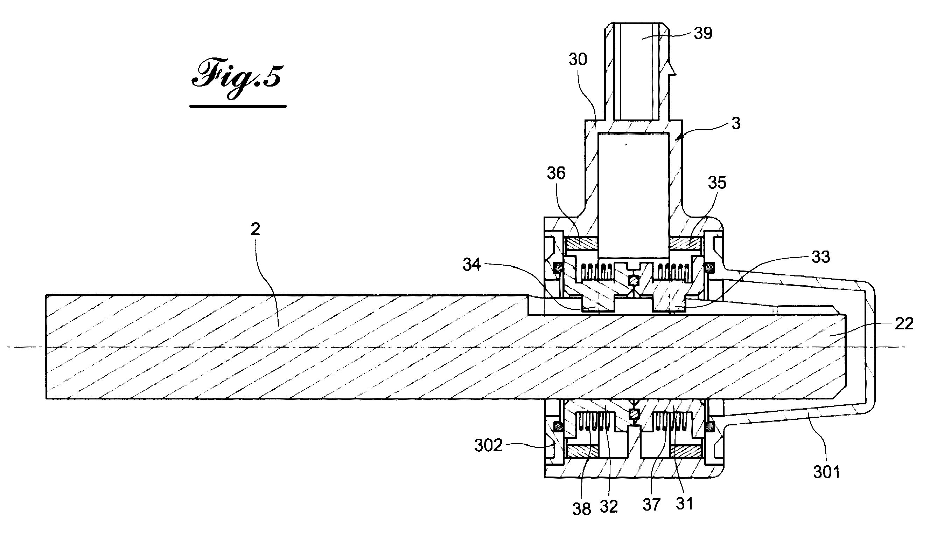

La figure 5 représente un capteur de position 3 selon un autre mode de réalisation de l'invention, qui est également destiné à être solidarisé au carter 1 de la boîte de vitesses à l'extérieur de celui-ci, en couvrant l'extrémité 22 du levier de commande 2.

Le capteur 3 comporte un boitier 30 destiné à être fixée à l'extérieur du carter 1 et fermé par un couvercle 301 protégeant l'extrémité 22 du levier 2 et un couvercle 302. Il comporte également deux bagues 31 et 32 de forme annulaire, montées pivotantes dans le boitier 30 et coulissantes sur la partie d'extrémité 22 du levier 2. Chacune de ces bagues présente un ergot sur sa face interne, qui pénètre dans une rainure 24, sensiblement longitudinale, de la partie d'extrémité 22 du levier 2. La translation de ces deux bagues 31 et 32 par rapport au châssis 1 de la boîte de vitesses est bloquée par les couvercles 301 et 302 fermant l'enveloppe 30.

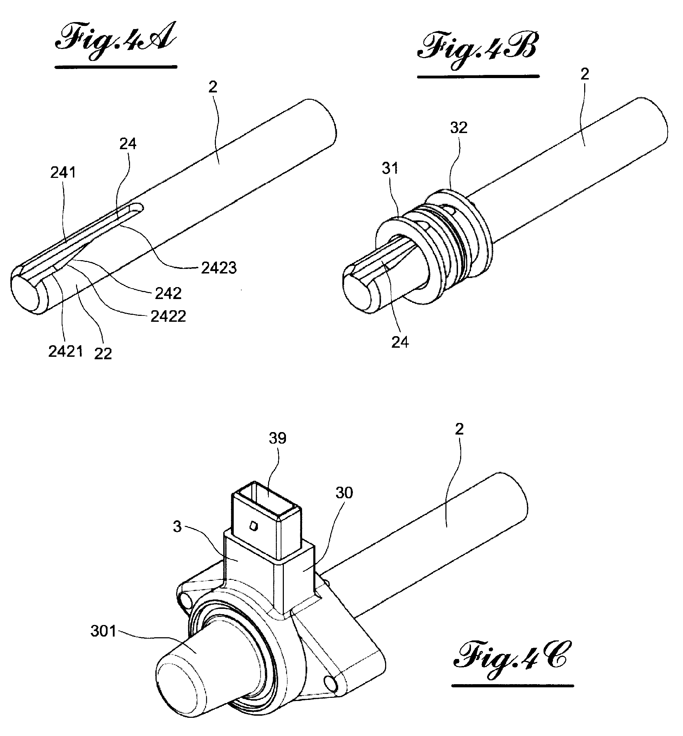

Les figures 4A, 4B et 4C représentent respectivement la partie d'extrémité 22 du levier 2 selon ce deuxième mode de réalisation de l'invention, cette partie d'extrémité 22 équipée des deux bagues 31 et 32, et cette partie d'extrémité 22 équipée du capteur 3.

Comme le montre la figure 4A, les deux bords latéraux, respectivement 241 et 242 de la rainure 24 ne sont pas parallèles. En effet, le bord latéral 241 est rectiligne et parallèle à l'axe longitudinal du levier 2, alors que le bord latéral 242 se divise en trois parties : la première partie 2421, la plus proche de l'extrémité du levier 2, s'étendant longitudinalement et formant une portion large de la rainure 24 ; la troisième partie 2423, la plus éloignée de l'extrémité du levier 2, s'étendant également longitudinalement et formant une partie plus étroite de la rainure 24 et la partie intermédiaire 2422, entre les parties 2421 et 2423, s'étendant hélicoïdalement, de façon à former une portion de la rainure 24 qui s'élargit progressivement en s'approchant de l'extrémité du levier 2.

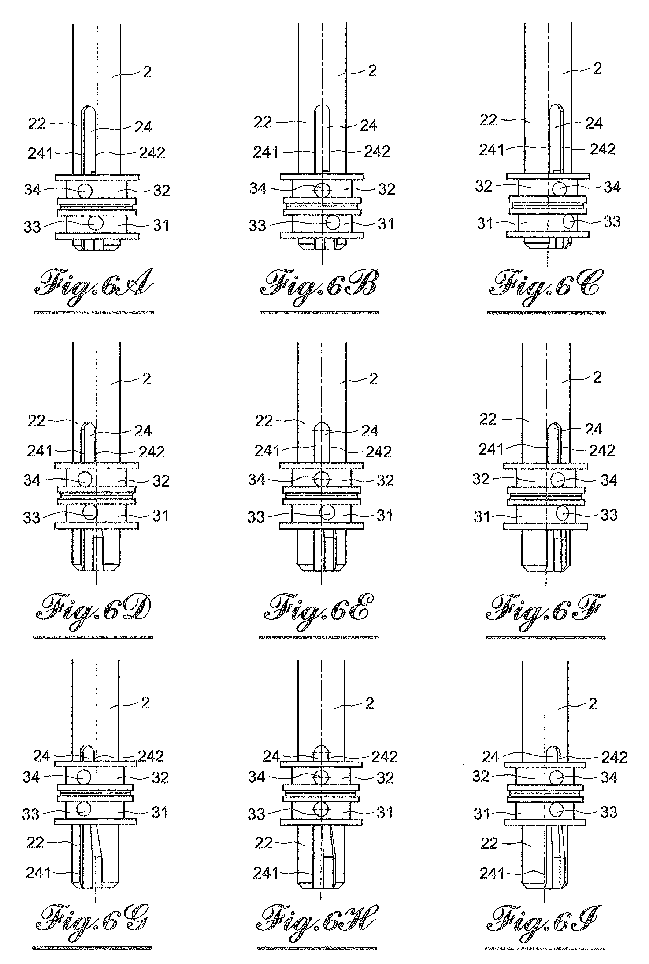

La figure 4B représente la partie d'extrémité 22 de du levier 2 sur laquelle sont montées les deux bagues 31 et 32 du capteur 3. Sur cette figure et les figures 6A à 6I, les positions des ergots de la face interne des bagues sont représentées par un cercle sur leurs faces externes.

Comme le montre la figure 5, chacune des deux bagues 31 et 32 est équipée, dans le capteur 3, d'un ressort de torsion, respectivement 37 et 38, tendant à faire tourner la bague dans un sens différent. Ainsi, la bague 31 est poussée par son ressort 37 de telle façon que son ergot 33 est constamment en contact avec le bord 242 de la rainure 24. De la même façon, la bague 32 est poussée par son ressort 38 de telle façon que son ergot 34 est en permanence en contact avec le bord 241 de la rainure 24.

Le bord 241 étant rectiligne et s'étendant longitudinalement sur toute sa longueur, la bague 32, dont l'ergot 34 est en contact avec ce bord, suit les déplacements angulaires du levier 2, quelle que soit sa position dans la rainure 24. Ainsi, cette bague présente en permanence la même position angulaire que le levier 2.

Dans les positions d'utilisation de la boite de vitesse, l'ergot 33 reste en contact avec la partie 2422 hélicoïdale du bord 242 de la rainure 24. La bague 31 qui le porte a donc une position angulaire dépendant de la position de l'ergot 33 sur ce bord 242, et donc de la position de coulissement du levier 2 le long de son axe longitudinal.

En conséquence, la position de coulissement du levier 2 le long de son axe longitudinal est lié au décalage angulaire entre les bagues 31 et 32.

Des systèmes sensitifs, respectivement 35 et 36, sont associés à chacune des bagues, respectivement 31 et 32, de façon à détecter leur position angulaire par rapport à l'enveloppe 30 du capteur 3. L'information ainsi recueillie concernant les positions angulaires des bagues 31 et 32 peut être envoyée à l'ordinateur de bord sous forme de signaux électriques par un câble passant dans l'ouverture 39 de l'enveloppe 30.

Les figures 6a à 6i représentent différentes positions possibles de la partie d'extrémité 22 du levier 2 par rapport aux bagues 31 et 32.

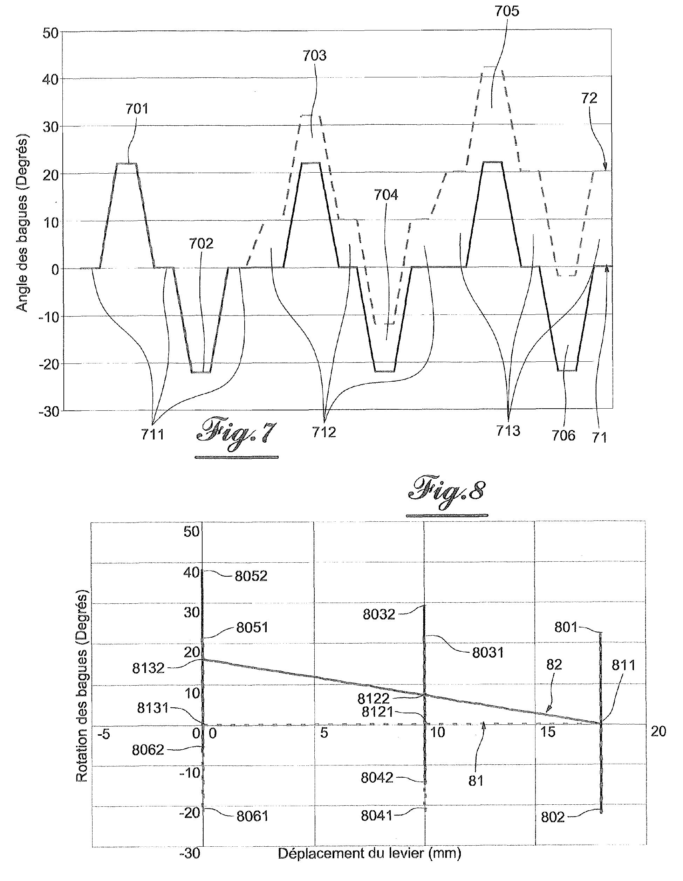

Les graphiques de la figure 7 représentent les angles que forment les bagues 31 et 32 par rapport au boitier du capteur 4, tels que captés par les systèmes sensitifs 35 et 36, pendant qu'un utilisateur change les rapports de vitesse de la boîte de vitesses. Ainsi, la courbe 71 en trait plein représente la mesure de l'angle de la bague 32 et la courbe 72 en pointillés représente la mesure de l'angle de la bague 31.

La figure 8 représente les rotations possibles des bagues 31 et 32 en fonction de la position de coulissement du levier 2 le long de son axe longitudinal. La courbe 81 en pointillés représente les angles de la bague 32 et la courbe 82 en trait plein représente les angles de la bague 31.

Quand la boîte de vitesses est au point mort, le levier 2 peut coulisser longitudinalement en restant dans une position angulaire de référence, représenté par les figures 6B, 6E et 6H, correspondant au couloir de point mort. Ce coulissement, encore appelé « mouvement de sélection », permet au levier de se placer dans une position de sélection, à partir de laquelle il sera possible d'engager une vitesse par un mouvement de rotation autour de l'axe longitudinal du levier 2, encore appelé « mouvement d'engagement ».

La figure 6H représente la partie d'extrémité 22 du levier 2 dans sa position de sélection à partir de laquelle il est possible d'engager les première et seconde vitesses. Dans cette position de point mort, le levier 2 est dans sa position angulaire de référence et son extrémité est avancée au maximum dans le capteur 4. Les ergots des bagues 31 et 32 sont engagés dans la portion étroite de la rainure 24, entre le bord 241 et la partie 2423 du bord 242. Les deux bagues 31 et 32 présentent alors le même angle, conventionnellement nul.

Dans cette position, les angles mesurés des bagues 31 et 32 sont représentés sous la référence 711 sur la figure 7, et sous la référence 811 sur la figure 8.

A partir de cette position de la figure 6H, le levier 2 peut pivoter comme le représente la figure 6I, pour engager le premier rapport de vitesse. Dans cette position, les deux bagues 31 et 32 forment le même angle d'environ 22°, conventionnellement positif, par rapport à l'enveloppe 30 du capteur 3.

Dans cette position, les angles mesurés des bagues 31 et 32 sont représentés sous la référence 701 sur la figure 7 et sous la référence 801 sur la figure 8.

Pour engager le second rapport de vitesse, le levier 2 pivote dans le sens contraire en entraînant les bagues 31 et 32, jusqu'à ce que ces bagues forment un même angle négatif d'environ 22° par rapport à l'enveloppe 30, comme le représente la figure 6G.

Dans cette position, les angles mesurés des bagues 31 et 32 sont représentés sous la référence 702 sur la figure 7 et sous la référence 802 sur la figure 8.

A partir de la position de point mort de sélection de premier et second rapports de vitesses, représentée par la figure 6H, il est possible de passer à la position de point mort de sélection des deuxième et troisième rapports de vitesse, représentée par la figure 6E, par coulissement du levier 2. Lors de ce coulissement, l'ergot 33 de la bague 31, qui est en appui contre le bord 242 de la rainure 24, glisse le long de la partie intermédiaire hélicoïdale 2422 en faisant pivoter légèrement la bague 31. Ainsi, dans la position de point mort représentée par la figure 6E, la bague 32 présente un angle nul alors que la bague 31 présente un angle positif d'environ 10° par rapport à sa position de référence.

Dans cette position, les angles mesurés des bagues 31 et 32 sont représentés sur la figure 7 sous les références 712 et sur la figure 8 sous la référence 8121 pour la bague 32 et 8122 pour la bague 31.

A partir de cette position, le levier 2 peut pivoter d'un angle positif d'environ 22° pour engager le troisième rapport de vitesse, comme le représente la figure 6F et d'un angle négatif d'environ 22° pour engager le quatrième rapport de vitesse, comme le représente la figure 6d.

Les angles mesurés des bagues 31 et 32 sont représentés, pour le troisième rapport de vitesse, sous la référence 703 sur la figure 7 et sous les références 8031 pour la bague 32 et 8032 pour la bague 31 sur la figure 8, et pour le quatrième rapport de vitesse, sous la référence 704 sur la figure 7 et sous les références 8041 pour la bague 32 et 8042 pour la bague 31 sur la figure 8.

A partir de la position de point mort de sélection des troisième et quatrième vitesses, représentées par la figure 6E, le levier 2 peut encore coulisser jusqu'à la position de point mort de sélection de cinquième rapport de vitesse et du rapport de marche arrière, représentée par la figure 6B. Lors de ce coulissement, la position angulaire de la bague 32 ne change pas, alors que l'ergot 33 de la bague 31 continue à glisser le long de la partie hélicoïdale 2422 du bord 242, jusqu'à venir en contact avec la partie 2421 de ce bord. Dans cette position représentée par la figure 6B, la bague 31 forme un angle positif d'environ 20 degrés par rapport à sa position de référence.

Dans cette position, les angles mesurés des bagues 31 et 32 sont représentés sur la figure 7 sous les références 113 sur la figure 7 et 8131 pour la bague 32 et 8132 pour la bague 31 sur la figure 8.

A partir de cette position, le levier 2 peut pivoter d'un angle positif d'environ 22° pour engager le cinquième rapport de vitesse, comme le représente la figure 6C et d'un angle négatif d'environ 22° pour engager le rapport de marche arrière, comme le représente la figure 6A.

Les angles mesurés des bagues 31 et 32 sont représentés, pour le cinquième rapport de vitesse, sous la référence 705 sur la figure 7 et sous les références 8051 pour la bague 32 et 8052 pour la bague 31 sur la figure 8, et pour le rapport de marche arrière, sous la référence 706 sur la figure 7 et sous les références 8061 pour la bague 32 et 8062 pour la bague 31 sur la figure 8.

Il apparaît ainsi qu'un unique couple de valeurs d'angle des bagues 31 et 32 est associé à chaque position pouvant être prise par le levier de vitesse 2 par rapport au carter 1 de la boîte de vitesses, ce couple de valeurs étant mesuré par le capteur 3. L'ordinateur de bord du véhicule, au vu de ces valeurs, peut déterminer de façon exacte et précise, l'état de la boîte de vitesses.

Il est à noter que cette méthode de mesure permet également de connaître l'état exact de la boîte de vitesses pendant le mouvement de rotation correspondant à l'engagement d'un rapport. Il est donc possible de savoir, à partir des valeurs mesurées par le capteur 3, si la boîte de vitesses est en position de synchronisation ou en position de crabotage, par exemple.

Le capteur 3 permet donc de savoir si on est au point mort, quelle vitesse est engagée, de connaître la position, la vitesse et l'accélération du levier lors de son mouvement de coulissement correspondant au mouvement de sélection, et la position, la vitesse et l'accélération du levier lors de son mouvement de rotation correspondant au mouvement d'engagement d'une vitesse.

Selon une variante de l'invention, le traitement des signaux contenant les informations d'angle peut être fait par un calculateur interne au capteur 3, plutôt que par un calculateur externe, par exemple pour isoler sur plusieurs signaux l'information de marche arrière, de point mort et des autres cas de position du levier.

Le capteur 3 étant monté, de préférence, en dehors du carter 1 de la boite de vitesse, il est isolé de l'huile et de la limaille présents dans ce carter et qui pourraient l'endommager ou fausser ses résultats. Par ailleurs, des moyens d'étanchéité sont avantageusement prévus entre la portion d'extrémité 22 du levier 2 dépassant de la boîte de vitesses et l'intérieur du carter 1.

## Revendications

1. Dispositif de détection de l'état d'une boîte de vitesses, comprenant un capteur (3, 4) fixé au carter (1) de la boîte de vitesse et associé à un levier de commande (2) de la boîte de vitesses pouvant coulisser longitudinalement par rapport au carter (1) de la boîte de vitesses entre plusieurs positions de sélection et pouvant pivoter autour de son axe longitudinal à partir de chacune de ces positions de sélection pour l'engagement d'un rapport de vitesse, le capteur (3, 4) fournissant une information représentative de la position angulaire du levier (2) par rapport au carter (1) et une information représentative de la position longitudinale du levier (2) par rapport au carter (1), entre ses positions de sélection, ledit capteur (3, 4) comprenant une première bague (42, 32) pivotante dans un boitier (41, 30) du capteur, par rapport à laquelle le levier (2) peut coulisser et liée en rotation avec ce levier (2), le capteur (2, 4) fournissant une information représentative de la position angulaire de cette bague (42, 32), **caractérisé en ce que** le capteur (3) comprend une seconde bague (31) pivotante par rapport au boitier (30) du capteur, associée au levier (2) par une liaison hélicoïdale, le coulissement du levier (2) entre ses positions de sélection entraînant une rotation de ladite seconde bague (31), permettant au capteur (3) de fournir des informations relatives au décalage angulaire entre la première bague (32) et la seconde bague (31), représentatif de la position longitudinale du levier (3) par rapport au carter (1), entre ses positions de sélection.

2. Dispositif de détection selon la revendication 1, **caractérisé en ce que** la première bague (42, 32) est liée en rotation avec le levier (2) par un ergot (44, 34) solidaire de la bague (42, 32) et engagé dans une rainure (23, 24) du levier.

3. Dispositif de détection selon la revendication 2, **caractérisé en ce que** la rainure (24) présente un premier bord (241) s'étendant parallèlement à l'axe longitudinal du levier et un second bord (242) s'étendant hélicoïdalement, et **en ce que** l'ergot (34) solidaire de ladite première bague (32) est maintenu en appui contre ledit premier bord (241) et ladite second bague (31) est en liaison hélicoïdale avec le levier (2) par un ergot (33) solidaire de ladite seconde bague (31) et maintenu en appui contre ledit second bord (242).

4. Dispositif de détection selon l'une quelconque des revendications précédentes, **caractérisé en ce que** le capteur (3, 4) est monté à l'extérieur du carter (1) de la boîte de vitesses, et est traversé par une partie d'extrémité (22) du levier (2) dépassant de ce carter.

5. Véhicule automobile équipé d'une boîte de vitesses, **caractérisé en ce que** la boîte de vitesses est équipée d'un dispositif de détection selon l'une quelconque des revendications 1 à 4.

6. Véhicule automobile selon la revendication 5, **caractérisé en ce qu'**il comprend des moyens de calcul permettant de calculer des informations relatives à l'état de la boîte de vitesses à partir des informations fournies par ledit capteur (3, 4).
